# EUROPÄISCHE PATENTSCHRIFT

(11) **EP 1 071 931 B1**
(45) Veröffentlichungstag und Bekanntmachung des Hinweises auf die Patenterteilung: **03.07.2002**
(21) Anmeldenummer: 99923416.4
(22) Anmeldetag: 15.04.1999
(51) Int. Cl.: G01J 5/00, G01J 5/34, G08B 13/19

(54) **SENSORVORRICHTUNG UND VERFAHREN ZUM BETREIBEN EINER SENSORVORRICHTUNG**
SENSOR DEVICE AND METHOD FOR OPERATING A SENSOR DEVICE
DISPOSITIF DETECTEUR ET PROCEDE DESTINE AU FONCTIONNEMENT D'UN DISPOSITIF DETECTEUR

(30) Priorität: 15.04.1998 DE 19816433
(43) Veröffentlichungstag der Anmeldung: 31.01.2001
(73) Patentinhaber: Steinel GmbH & Co. KG, 33442 Herzebrock-Clarholz (DE)
(72) Erfinder: STEINEL, Heinrich, Wolfgang, D-86825 Bad Wörishofen (DE)
(74) Vertreter: Behrmann, Niels, Dipl.-Ing.
(86) Internationale Anmeldenummer: EP9902543
(87) Internationale Veröffentlichungsnummer: WO9953278

(56) Entgegenhaltungen:
- EP-A- 0 235 372
- DE-U- 29 705 569
- US-A- 4 195 234
- US-A- 5 629 676

## Beschreibung

Die vorliegende Erfindung betrifft eine Sensorvorrichtung nach dem Oberbegriff des Patentanspruches 1, eine Verwendung sowie ein Verfahren zum Betreiben einer solchen.

Gattungsgemäße Sensorvorrichtungen sind aus dem Stand der Technik, beispielsweise aus der Alarmtechnik, bekannt und weisen einen auf Infrarotbasis arbeitenden Pyrodetektor auf, der üblicherweise als Bewegungssensor konfiguriert ist und ein Detektorsignal als Reaktion auf eine signifikante Änderung eines auf den Sensor einfallenden Infrarot-Strahlungsmusters ausgibt. Einer solchen gattungsgemäßen Sensorvorrichtung sind dann geeignete Verbraucher, Signalgeräte oder sonstige, zu steuernde Funktionseinheiten nachgeschaltet, etwa Beleuchtungsvorrichtungen, Überwachungskameras, Alarmanlagen od.dgl. Einheiten.

Aus dem Stand der Technik sind ferner sog. Sensorleuchten bekannt, nämlich bewegungssensorgesteuerte Leuchteinheiten, die -- bei entsprechend niedriger äußerer Umgebungshelligkeit -- üblicherweise als Reaktion auf die Bewegung einer Person aktiviert werden können. Auch derartige Sensorleuchten weisen einen Passiv-Infrarotsensor (PIR) mit pyroelektrischen Detektorelementen auf; üblicherweise werden derartige Beleuchtungsvorrichtungen jedoch nicht bestimmungsgemäß bei Tageslicht betrieben. Da die pyroelektrischen Detektoren jedoch in der Regel ausschließlich auf Infrarotstrahlung reagieren, eignen sie sich auch zur Bewegungsdetektion bei Tageslicht.

In praktischen Versuchen hat sich jedoch insbesondere eine sehr helle Außenumgebung, d.h. ein hoher Strahlungspegel im sichtbaren Umgebungslichtbereich, als nachteilig für den zuverlässigen Betrieb von pyroelektrischen Detektoren herausgestellt, und zwar dergestalt, daß diese -- in Abwesenheit von jeglichem Bewegungssignal -- Fehlschaltungen auslösen, die, wie der vorliegenden Erfindung zugrundeliegende Versuche gezeigt haben, üblicherweise durch Helligkeitsschwankungen bedingt sind. Gängige pyroelektrische Sensoren (oder Pyrosensoren bzw. Thermopile-Sensoren) erzeugen ein auswertbares Signal, wenn sich die auf Detektionsflächen des Sensors einfallende Strahlungsmenge ändert; diese Signaländerung wird zur Bewegungsdetektion gezielt ausgewertet. Zur Vermeidung von Störungen durch solche Signale, die nicht durch die Bewegung einer Person oder eines Objekts verursacht werden, weisen gängige Pyrosensoren ein Filter auf, welches nur Strahlung in den relevanten, infraroten Spektralbereichen (z.B. 8 bis 14 Mikrometer) durchläßt; Strahlung aus anderen Spektralbereichen -- bei sichtbarem Licht etwa 380 bis 760 Nanometer -- wird durch Reflektion oder Absorption ausgefiltert.

Allerdings haben die Versuche im Rahmen der vorliegenden Erfindung ergeben, daß bei sehr großen Strahlungsmengen, unabhängig vom Spektralbereich, das als Massefilter ausgebildete Eintrittsfenster des Detektors sich geringfügig erwärmt, nämlich durch solche Strahlungsanteile, die nicht transmittiert oder reflektiert werden. Diese absorbierte Wärme wird dann an die jeweilige innere bzw äussere Oberfläche des Sensors geleitet und dort in Form von Wärmestrahlung vom Filter wiederum abgestrahlt. Dies kann dann die Detektorflächen des Sensors -- unerwünscht -- aktivieren. Während bei sehr langsamen Änderungen der Gesamtbestrahlungsstärke die Wärmeableitung im Filter sowie eine bandpassförmige Verstärkungscharakteristik der Sensoren Fehlschaltungen verhindern, wird jedoch insbesondere dann ein (Fehl-) Signal erzeugt, wenn sich die Bestrahlungsstärke in einer innerhalb des Bandpasses liegenden Frequenz ändert, üblicherweise 0,1 bis 10 Hz, und durch entsprechend starke Änderungen soviel Wärme im Filter erzeugt wird, daß ein auswertbares Signal entsteht. Im Ergebnis erfaßt dann der Sensor ein Signal, ohne daß eine Bewegung im Detektionsbereich aufgetreten wäre.

Erfindungsgemäß hat sich herausgestellt, daß diese Störungen bei -Helligkeitsschwankungen ab etwa 2.000 lux auftreten, wobei insbesondere bei großer Helligkeit -- sommerliche Sonnenstrahlung -- bereits Abschattungen durch kaum sichtbare Schleierwolken derartige Änderungen um einige 1000 Lux bewirken können, ohne daß sie etwa vom Menschen wahrgenommen werden.

Da jedoch herkömmliche Sensorleuchten üblicherweise in Helligkeitsbereichen betrieben werden, die unter 2000 Lux liegen (daher auch der Einsatz als sog. "Dämmerungsschalter"), konnten hier ohnehin keine Fehlschaltungen durch signifikante Helligkeitsschwankungen auftreten.

Für einen effektiven, weitgehend störungsfreien (vor Fehlschaltungen geschützten) Betrieb bei Tageslicht sind bestehende Sensorvorrichtungen jedoch nachteilig und verbesserungsbedürftig, und insbesondere sind die durch Helligkeitsschwankungen verursachten, unbeabsichtigten Sensoraktivierungen zu vermeiden.

Aus der US-A-4 195 234 ist eine Sensorvorrichtung bekannt, welche einen pyroelektrischen Sensor sowie eine Auswerteelektronik aufweist, die zum Erzeugen eines Steuersignals relativ zu einem Schwellwert ausgebildet ist. Ferner weist die Auswertelektronik Mittel zum Messen einer durch Änderungen der Umgebungstemperaturen, nämlich hier der Umgebungstemperatur, verursachten Störung auf, sowie Kompensationsmittel, die so ausgebildet sind, dass eine kompensierende Änderung des Detektorsignals durchgeführt wird.

Ferner weist die US-A-5 629 676 eine entsprechende Vorrichtung zur Messung einer durch Anderung in der Umgebungstemperatur verursachten Störung sowie zur entsprechenden Kompensation auf.

Ferner ist es aus der EP-A-0 235 372 bekannt, Einflüsse von Umgebungshelligkeit auf einen Bewegungsmelder zu unterdrücken.

Aufgabe der vorliegenden Erfindung ist es daher, eine gattungsgemäße Sensorvorrichtung im Hinblick auf ihr Detektions- und Schaltverhalten bei großen absoluten Änderungen der Umgebungshelligkeit zu verbessern und insbesondere Fehlschaltungen, die helligkeitsbedingt sind, zu vermeiden.

Die Aufgabe wird durch die Sensorvorrichtung mit den Merkmalen des Patentanspruches 1, des unabhängigen Verfahrensanspruches 6, des Verwendungsanspruchs 7 sowie des unabhängigen Patentanspruches 9 gelöst. Vorteilhafte Weiterbildungen der Erfindung sind in den abhängigen Ansprüchen beschrieben.

Vorteilhaft werden erstmals Mittel zum unmittelbaren Messen der Umgebungshelligkeit bzw. einer Änderung derselben eingesetzt, und es wird dieser erfaßte Helligkeitshub verwendet, um mit den erfindungsgemäßen Kompensationsmitteln eine dynamische, aktuellen Lichtverhältnissen entsprechende Beeinflussung des Schaltverhaltens des Sensors vorzunehmen. Die unmittelbare Messung der Helligkeitsänderung (bzw. des Strahlungshubes) ermöglicht es dabei, das Verhältnis zwischen Strahlungshub und Sensorsignal (bzw. dessen Veränderung als Reaktion auf den Strahlungsschub) festzustellen und rechnerisch bzw. numerisch zu kompensieren (also Änderungen der Umgebungsbedingungen).

In der konkreten Realisierung der Mittel zum Messen besteht zum einen die Möglichkeit, einen -- ggf. im Rahmen einer mit einer Bildaufnahmeeinheit versehenen Anwendung ohnehin vorhandenen -- CCD-Chip oder CMOS-Chip zur Ermittlung der absoluten Änderung des Helligkeitssignals (im sichtbaren Spektralbereich) zu verwenden; damit steht auf einfache Weise und ohne zusätzlichen Hardware-Aufwand dieses Helligkeitssignal zur Berücksichtigung im Rahmen der Erfindung zur Verfügung.

Als mögliche Alternative bietet es sich an, einen zusätzlichen Pyrodetektor, der weiter bevorzugt dem pyroelektrischen Sensor im Hinblick auf seine Erfassungseigenschaften nachgebildet ist, einzusetzen, wobei bei diesem zusätzlichen Pyrodetektor das eigentliche Nutzsignal ausgeblendet ist. Damit misst der zusätzliche Pyrodetektor lediglich die durch andere, zu kompensierende Effekte verursachten Störungen des Nutzsignals, wie sie etwa durch Licht, Wärme oder elektromagnetische Wellen entstehen können (Änderungen der Umgebungsbedingungen). Mit anderen Worten, der weiterbildungsgemäß eingesetzte gleiche Sensortyp, wie der zur Erfassung des Nutzsignales eingesetzte, wird mit geeigneten Filtermitteln für das Nutzsignal gesperrt und dient somit nur zur Erfassung der systembedingten, von der Umgebung ausgehenden Störungen.

Im Ergebnis ist dann erreichbar, daß Fehlschaltungen, die z. B. auf starken Helligkeitsschwankungen beruhen, unterdrückt werden können.

Dabei liegt es im Rahmen der Erfindung, durch geeignete Beeinflussung einer den Schaltvorgang beeinflussenden Schaltschwelle die Kompensation herbeizuführen und/oder ein Sensor-Ausgangssignal um entsprechende helligkeitsabhängige Korrekturwerte zu berichtigen; diese können ggf. auch in Tabellenform vorhanden sein und bedarfsweise ausgelesen werden.

Unabhängiger Schutz im Rahmen der vorliegenden Erfindung wird für eine Lösung beansprucht, die den Kompensationseffekt in erfindungsgemäßer Weise durch optische Filtermittel realisiert. Diese Filtermittel setzen zum einen den Betrag der auf ein Detektorelement fallenden Strahlung so herab, daß die Gefahr helligkeitsbedingter Fehlschaltungen vermieden wird, und zum anderen ist durch die erfindungsgemäßen Filtermittel sichergestellt, daß der Erfassungsbereich der Nutzstrahlung im infraroten Bereich unabhängig von einem konkreten Einfallswinkel auf ein Detektorelement des Sensors ist und über einen minimalen Winkelbereich konstant bleibt.

So ist es besonders bevorzugt, mit den Kompensationsmitteln Schwellwerte bzw. Schwellwertbereiche zur Erzeugung des Steuersignals dynamisch zu vergrößern bzw. zu verkleinern; weiter bevorzugt ist es, einen aktuellen Schwellwert einem Umgebungslichtpegel nachzuführen.

Während zur Realisierung der Erfindung Licht- bzw. Photodetektoren jeglicher Art geeignet sind, die eine Strahlungserfassung der angegebenen hohen Helligkeiten und großen Helligkeitsschwankungen ermöglichen, so ist es besonders bevorzugt, zur Helligkeitsmessung die Belichtungseinrichtung eines CCD-Kameralelements od.dgl. integrierten Bildaufnahmeelements zu verwenden, welches ggf. ohnehin schon bereits im Rahmen einer Gesamtanlage der Sensorvorrichtung als Funktionseinheit nachgeschaltet ist. Eine derartige Funktionseinheit mit gattungsgemäßer Sensorvorrichtung ist dem deutschen Gebrauchsmuster DE 297 05 569 der Anmelderin zu entnehmen.

Erfindungsgemäß wird dadurch nicht nur die Eigenschaft des CCD-Elements genutzt, große Helligkeitshübe aufnehmen und auflösen zu können, auch wird.durch eine solche Anordnung ein separater Sensor zur Störgrößenermittlung überflüssig.

Gemäß der unabhängigen Lösung durch optische Filtermittel sind diese bevorzugt mittels einer abnehmbaren Filterkappe realisiert, die weiter bevorzugt kuppelförmig, kuppelförmig und/oder mit einem halbkugelfrömigen Abschnitt ausgebildet ist. In erfindungsgemäß vorteilhafter Weise hat sich Polyethylen als Werkstoff für eine solche Filterkappe bewährt, wobei weiter bevorzugt dieses Material mit einer Rußbeimengung < 1 %, weiter bevorzugt < 0,5 %, versehen ist.

Auch liegt es im Rahmen der Erfindung, gemäß einer besonderen Weiterbildung die Wandstärke des Filters (bzw. der Filterkappe) winkelabhängig variabel und bevorzugt so auszugestalten, daß eine gleichmäßige Reichweite im gesamten Erfassungsbereich erzielt wird; insbesondere wird hier lösungsgemäß die Filterdicke so eingestellt, daß die Absorption im Mittenbereich größer und im Randbereich geringer ist, jeweils bezogen auf den erfindungsgemäßen Winkelbereich.

In besonders vorteilhafter Weise ist durch diese optische Filterlösung auch das Nachrüsten bestehender Systeme problemlos gewährleistet, indem nämlich die erfindungsgemäßen Filtermittel zum Aufsetzen auf herkömmliche, handelsübliche Pyrodetektoren ausgebildet sind.

Weitere Vorteile, Merkmale und Einzelheiten der Erfindung ergeben sich aus der nachfolgenden Beschreibung bevorzugter Ausführungsbeispiele anhand der Zeichnungen; diese zeigen in
- Fig. 1:: ein schematisches Blockschaltbild einer ersten, bevorzugten Ausführungsform der Erfindung und
- Fig. 2:: eine seitliche Schnittansicht einer Filterkappe gemäß einer zweiten Ausführungsform der vorliegenden Erfindung.

Ein pyroelektrischer Bewegungssensor 10 mit einem Erfassungswinkel ϕ (Gesichtswinkel) von üblicherweise etwa 75° weist ein Paar von infrarotempfindlichen Detektorelementen 12 auf, deren Ausgangssignal in Abhängigkeit von einfallender Infrarotstrahlung und deren Änderungen in ansonsten bekannter Weise auf Bewegung ausgewertet wird.

Dem Pyrodetektor 10 ist eine Sensorelektronik (Auswerteinheit) 14 nachgeschaltet, die das Ausgangssignal des Pyrodetektors 10 empfängt, diese auswertet und als Ergebnis der Auswertung ein Schaltsteuersignal S erzeugt, womit eine nachgeschaltete Funktionseinheit 16, im dargestellten Beispiel ein Alarmgeber, aktiviert wird.

Genauer gesagt vergleicht die Sensorelektronik zur Erzeugung des Schaltsteuersignals S das Pyrodetektor-Ausgangssignal mit einer Schaltschwelle, die von einem Schwellengenerator 18 erzeugt wird. Darüber hinaus fließt in die Erzeugung des Schaltsignals S das Ergebnis einer Helligkeitsmessung der (Tageslicht-) Umgebungshelligkeit ein, die mittels eines Licht-/Helligkeitssensors 20 sowie einer nachgeschalteten Helligkeits-Auswertelektronik 22 durchgeführt wird. Das Ausgangssignal der Helligkeitsauswertung beeinflußt dann die Erzeugung des Schaltsignals S auf zweierlei Weise: Zum einen sorgt ein erfaßter großer Helligkeitshub im Detektor 20 dafür, daß eine Schaltschwelle durch den Generator 18 in entsprechend großer Weise geändert bzw. verschoben wird; darüber hinaus kann die erfaßte Helligkeitsschwankung im Wege der Signalaufbereitung in der Elektronik 14, etwa bei der Mittelwertbildung über eine Vielzahl von Einzelwerten, berücksichtigt werden.

Konkret sind die gezeigten Funktionseinheiten damit in der Lage, die Kompensation wie folgt durchzuführen: Zum einen ist es möglich, in Abhängigkeit von erfaßten Helligkeitspegeln bzw. Helligkeitsschwankungen den bzw. die Schwellwert(e) für das Schaltsignal S zu vergrößern. Bei entsprechend hohem Lichtpegel des Umgebungslichtes würde dann der Sensor erst zu einem der Kompensation entsprechenden Pegel ansprechen. Zum anderen wäre es möglich, die Schwelle(n) konstant zu lassen, nachdem aus den beiden Sensoren (10, 20) das tatsächliche Nutzsignal in der Elektronik 14 ermittelt wurde. Bei letzterer Kompensationsschaltung bleibt die Empfindlichkeit des Sensors bezüglich des Nutzsignales erhalten, auch wenn Störungen vorliegen.

Durch Methoden insbesondere der digitalen Signalverarbeitung, ggf. verbunden mit gespeicherten Steliwerten, läßt sich insbesondere das erste Verfahren einfach realisieren; dies weist jedoch noch den Nachteil gegenüber dem zweiten Verfahren auf, daß die Sensorempfindlichkeit bei starken Helligkeitsschwankungen abnimmt.

Besonders geeignet ist es zudem, eine Helligkeitsänderung im Rahmen der vorliegenden Erfindung stets relativ zum Absolutwert der Helligkeit zu betrachten, also etwa einen erfaßten Hub bezogen auf einen aktuellen Absolutwert.

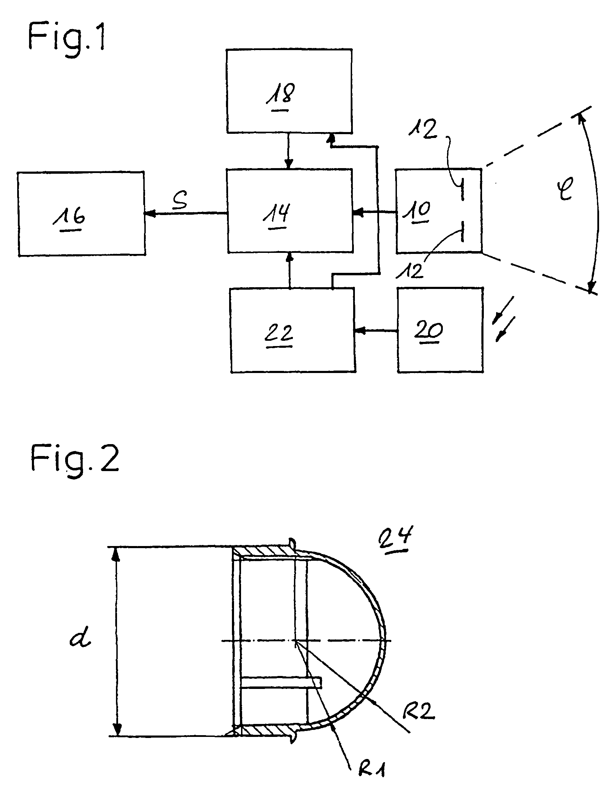

Während bei der in Fig. 1 gezeigten Ausführungsform die Helligkeitsschwankungen sowohl im Wege einer Beeinflussung der Schaltschwelle (sog. dynamische Schwelle) bzw. Beeinflussung des Pyrosensorsignals möglich war, ist es natürlich auch möglich, die Kompensation mit einem von beiden Wegen durchzuführen.

Im praktischen Betrieb erweisen sich insbesondere Helligkeitsschwankungen von mehr als etwa 2000 bis 10000 Lux als besonders bedeutsam; nicht nur treten derartige Helligkeitsschwankungen gerade bei hohem Umgebungslichtpegel häufig und mit einer Frequenz im Ansprechbereich des Sensors auf, auch sind diese oft für das menschliche Auge -- gerade bei hohem Umgebungslichtpegel -- praktisch nicht erkennbar.

In Weiterentwicklung der beschriebenen ersten Ausführungsform ist es besonders bevorzugt, eine durch die Sensorvorrichtung zu aktivierende Funktionseinheit mit eigenem Licht- bzw. Bildsensor, wie es etwa die von der Anmelderin hergestellte Sensorleuchte mit eingebautem Kameramodul gemäß deutschem Gebrauchsmuster 297 05 689 ist, zu kombinieren. Eine solche Vorrichtung ist insbesondere auch zum Betrieb bei Tageslicht vorgesehen und würde ohne eine Kompensation gemäß vorliegender technischer Lehre in nachteiliger Weise durch starke Helligkeitsschwankungen des Umgebungslichts unerwünscht aktiviert werden.

Besonders vorteilhaft ist es, die ohnehin bereits vorhandene Kameraelektronik zu benutzen, um einen Helligkeitswert für die vorbeschriebene Kompensation zu erhalten; vorteilhaft ist nämlich ein Kamera-Belichtungssystem bzw. die CCD/CMOS-Einheit gut geeignet, um auch große Helligkeitshübe bzw. starke Helligkeitsschwankungen zuverlässig zu erfassen und aufzulösen.

Durch Integration der vorliegenden Erfindung in eine solche Kameraleuchte unter Ausnutzung der bereits vorhandenen Umgebungslichtmessung wird dadurch nicht nur zusätzlicher. Bauteileaufwand vermindert, es kann zudem die Funktionssicherheit und damit auch der effektive technische Nutzen für einen Benutzer beträchtlich erhöht werden.

Unter Bezug auf Fig. 2 wird nachfolgend eine alternative Ausführungsform der vorliegenden Erfindung beschrieben. Diese Ausführungsform sieht vor, daß -- alternativ oder in Ergänzung zu der vorbeschriebenen elektronischen Lösung durch Helligkeitserfassung und Korrektur der Schaltsignalerzeugung in Abhängigkeit von einem Helligkeitssignal -- der Pyrosensor mit einer aufsteckbaren, abnehmbaren Filterkappe 24 versehen ist, die in der Fig. 2 in der seitlichen Schnittansicht gezeigt ist. Die Kappe 24 eines Durchmessers d von etwa 10 mm ist aus HDPE im Spritzgießverfahren hergestellt und paßt auf ein Gehäuse des Standards TO5. Das Kunststoffmaterial wird eingefärbt; gut eignet sich hierfür etwa Ruß mit einem Gewichtsanteil < 1%.

Bisherige Sensoren verwenden teilweise eingefärbte optische Systeme zur Verringerung des Tageslichtanteiles. Diese bedecken dann jedoch den mit auf der Elektronik enthaltenen Helligkeitssensor ("Dämmerungsschalter"), der dann entsprechend schlechter funktioniert, weil die ausgeblendete "Störung" Tageslicht für diesen Sensor das Nutzsignal darstellt. Alternativ, jedoch mit erheblichem zusätzlichem Aufwand, kann bei bisherigen Systemen der Helligkeitssensor räumlich von der Infrarotoptik getrennt und mit einem eigenen Fenster versehen werden.

Konkret wird mit der gezeigten Kappe einer Wandstärke von etwa 0,3 mm bei Rußbeimengung von 0,5 % eine Reduzierng des Tageslichtanteils um den Faktor 20 erreicht, während die Reichweiteneinbuße durch Absorption des Infrarotanteils nur bei etwa 20 bis 30 % liegt.

Eine solche aufsteckbare Filterkappe weist nicht nur den Vorteil einfacher, preisgünstiger Herstellbarkeit auf, sie ist darüber hinaus auch geeignet, bestehende Sensoren in geringstem Aufwand auf- bzw. umzurüsten und damit diese existierenden Pyrosensoren auch für einen störungsfreien Tageslichtbetrieb geeignet zu machen.

Durch die Kuppelform durch die Kappe (Radius im Außenbereich z.B. 4,2 mm, im Innenbereich z.B. 4,5 mm), ggf. verbunden mit einer variablen Wanddicke (dünnere Wandstärke im Randbereich, stärke Wände im zentralen Bereich der optischen Achse), läßt sich zudem eine gleichmäßige Reichweite im gesamten Erfassungsbereich realisieren. Eine solche Wandstärke, die dem Inversen des Kosinus des jeweiligen Einfallswinkel proportional ist, ist dann darüber hinaus abhängig von der Filtercharakteristik im spektralen Signalerfassungsbereich (z.B. 8 bis 14 Mikrometer), einer aus Festigkeitsgründen notwendigen Mindestwandstärke, einer maximalen Wandstärke sowie einem gewünschten maximalen Erfassungswinkel.

Auf die beschriebene Weise kann somit mit einfachen Mitteln eine Unterdrückung von Einflüssen durch starke Helligkeitsschwankungen auf die Funktionsweise von Pyrosensoren erreicht werden.

## Patentansprüche

1. Sensorvorrichtung mit einem zum Betreiben bei Tageslicht eingerichteten pyroelektrischen Sensor (10), insbesondere einem Bewegungssensor auf Infrarotbasis, und einer dem Sensor (10) nachgeschalteten Auswertelektronik (14, 18, 22), die zum Erzeugen eines Steuersignals (S) als Reaktion auf ein Detektorsignal des Sensors relativ zu einem Schwellwert ausgebildet ist, **dadurch gekennzeichnet, daß**
die Auswertelektronik Mittel zum Messen einer Tageslicht-Umgebungshelligkeit (20, 22) sowie Kompensationsmittel (18, 22) aufweist, die so ausgebildet sind, daß sie als Reaktion auf eine vorbestimmte Änderung der Tageslicht-Umgebungshelligkeit eine kompensierende Schwellwertänderung des Schwellwertes und/oder eine kompensierende Änderung des Detektorsignals durchführen, wobei die Auswertelektronik so ausgebildet ist, daß die Kompensationsmittel erst wirken, wenn eine Änderung der Tageslicht-Umgebungshelligkeit mehr als 1000 Lux im bandpassförmigen Ansprechbereich des Sensors beträgt.

2. Vorrichtung nach Anspruch 1, **dadurch gekennzeichnet, daß** die Kompensationsmittel zum Verschieben eines Schwellwertpegels bzw. zum Vergrößern eines Abstandes zwischen zwei Schwellwerten ausgebildet sind.

3. Vorrichtung nach Anspruch 1 oder 2, **dadurch gekennzeichnet, daß** die Kompensationsmittel zum Nachführen mindestens eines Schwellwertes in der Richtung einer Sensorbeeinflussung durch die Änderung der Umgebungshelligkeit ausgebildet sind.

4. Vorrichtung nach einem der Ansprüche 1 bis 3, **dadurch gekennzeichnet, daß** die Mittel zum Messen einen pyroelektrischen Detektor aufweisen, der im Hinblick auf seine elektrischen Eigenschaften dem pyroelektrischen Sensor nachgebildet ist.

5. Vorrichtung nach einem der Ansprüche 1 bis 3, **dadurch gekennzeichnet, daß** die Mittel zum Messen durch ein Helligkeits-Erfassungselement eines mit der Auswertelektronik verbundenen Bilderfassungs- und Übertragungsapparats, insbesondere durch ein CCD- oder CMOS-Element oder ein vergleichbares intgegriertes Bildaufnahmeelement, realisiert sind.

6. Verfahren zum Betreiben einer einen pyroelektrischen Sensor (10) aufweisenden Sensorvorrichtung bei Tageslicht, insbesondere nach einem der Ansprüche 1 bis 5, mit den Schritten:
- Erfassen einer Änderung einer Tageslicht-Umgebungshelligkeit;
- Erfassen eines Sensor-Detektorsignals;
- Ändern einer Schaltschwelle für ein Steuersignal der Sensorvorrichtung und/oder
- Ändern des Sensor-Detektorsignals als Reaktion auf eine erfasste Änderung der Tageslicht-Umgebungshelligkeit von mehr als 1000 Lux im bandpassförmigen Ansprechbereich des Sensors, und
- Erzeugen des Steuersignals in Abhängigkeit vom Sensor-Detektorsignal und der Schaltschwelle.

7. Verwendung der Sensorvorrichtung nach einem der Ansprüche 1 bis 5, in einer Sensorleuchte mit einem als Reaktion auf ein Ausgangssignal des an oder in einem Leuchtengehäuse angeordneten pyroelektrischen Sensors als Bewegungs-Erfassungssensor aktivierbaren Leuchtmittel, wobei am oder im Leuchtengehäuse eine elektronische Bilderfassungseinrichtung vorgesehen ist, die zum Zusammenwirken mit einem drahtlosen Bildübertragungsmodul für ein in einem Bilderfassungsmodus erzeugtes, extern empfangbares Bildsignal ausgebildet ist.

8. Verwendung nach Anspruch 7, **dadurch gekennzeichnet, dass** die elektronische Bilderfassungseinrichtung einen CCD-Kamerasensor aufweist, der als die Mittel zum Messen der Tageslicht-Umgebungshelligkeit wirkt.

9. Sensorvorrichtung mit einem zum Betreiben bei Tageslicht eingerichteten pyroelektrischen Sensor (10), insbesondere einem Bewegüngssensor auf Infrarotbasis, und einer dem Sensor (10) nachgeschalteten Auswertelektronik (14, 18, 22), die zum Erzeugen eines Steuersignals (S) als Reaktion auf ein Detektorsignal des Sensors relativ zu einem Schwellwert ausgebildet ist, insbesondere nach einem der Ansprüche 1 bis 5, **dadurch gekennzeichnet, daß** auf einen Erfassungsbereich des Sensors optische Filtermittel (24) aufgesetzt sind, die so ausgebildet sind, daß eine Absenkung des spektralen Tageslichtanteils der auf den Erfassungsbereich fallenden Strahlung auf < 10 % der ungefilterten Strahlung, bevorzugt auf < 5 %, erfolgt, und
die Filtermittel so ausgebildet sind, daß eine Dämpfung der einfallenden Strahlung im Infrarotbereich über einen Winkelbereich von mindestens 65°, bevorzugt mindestens 75°, unabhängig von einem Einfallswinkel auf den Sensor ist und eine Reichweiteneinbuße durch Absorption des Infrarotanteils bei etwa 20 bis 30 % liegt.

10. Vorrichtung nach Anspruch 9, **dadurch gekennzeichnet, daß** die Filtermittel als aufsteckbare, abnehmbare Filterkappe realisiert sind.

11. Vorrichtung nach Anspruch 9 oder 10, **dadurch gekennzeichnet, daß** die Filtermittel aus Polyethylen oder einem optisch gleichwirkenden Kunststoff realisiert sind.

## Claims

1. Sensor device with a pyroelectric sensor (10) adjusted to operate in daylight, in particular a movement sensor on infrared basis, and an electronic evaluation device (14, 18, 22) connected downstream of the sensor (10) and designed to generate a control signal (S) as a reaction to a detector signal of the sensor relative to a threshold value, **characterised in that** the electronic evaluation device comprises means for measuring a daylight-ambient luminosity (20, 22) and compensating means (18, 22) designed in such a way that they carry out a compensating threshold value change in the threshold value and/or a compensating change in the detector signal as a reaction to a predetermined change in the daylight-ambient luminosity, the electronic evaluation device being designed in such a way that the compensating means only act if a change in the daylight-ambient luminosity is more than 1,000 lux in the band-pass filter-like response range of the sensor.

2. Device according to claim 1, **characterised in that** the compensating means are designed to move a threshold value level or to increase a distance between two threshold values.

3. Device according to claim 1 or 2, **characterised in that** the compensating means are designed to track at least one threshold value in the direction of a sensor influence by changing the ambient luminosity.

4. Device according to any of claims 1 to 3, **characterised in that** the means for measuring comprise a pyroelectric detector which, in terms of its electrical properties, imitates the pyroelectric sensor.

5. Device according to any of claims 1 to 3, **characterised in that** the means for measuring are produced by a luminosity detection element of an image detection and transmission apparatus connected to the electronic evaluation device, in particular by a CCD- or CMOS-element or a comparable integrated image receiving element.

6. Method for operating a sensor device comprising a pyroelectric sensor (10) in daylight, in particular according to any of claims 1 to 5, comprising the steps:
- detecting a change in the daylight-ambient luminosity;
- detecting a sensor detector signal;
- changing a switching threshold for a control signal of the sensor device and/or
- changing the sensor detector signal as a reaction to a detected change in the daylight-ambient luminosity of more than 1,000 lux in the band-pass filter-like response range of the sensor, and
- generating the control signal as a function of the sensor detector signal and the switching threshold.

7. Use of the sensor device according to any of claims 1 to 5, in a sensor light with a light means which can be activated as movement detection sensor as a reaction to an output signal of the pyroelectric sensor arranged on or in a light housing, an electronic image detection device designed to cooperate with a wireless image transmission module for an externally receivable image signal generated in an image detection mode being provided on or in the light housing.

8. Use according to claim 7, **characterised in that** the electronic image detection device comprises a CCD camera sensor acting as the means for measuring the daylight-ambient luminosity.

9. Sensor device with a pyroelectric sensor (10) adjusted to operate in daylight, in particular a movement sensor on infrared basis, and an electronic evaluation device (14, 18, 22) connected downstream of the sensor (10) and designed to generate a control signal (S) as a reaction to a detector signal of the sensor relative to a threshold value, in particular according to any of claims 1 to 5, **characterised in that** optical filter means (24) are placed on a detection region of the sensor, the means being designed in such a way that there is a reduction in the spectral daylight fraction of the radiation falling onto the detection region to < 10% of the unfiltered radiation, preferably to < 5%, and the filter means are designed in such a way that a damping of the incident radiation in the infrared range over an angular range of at least 65°, preferably at least 75°, is independent of an angle of incidence on the sensor and a loss in range owing to absorption of the infrared fraction is approximately 20 to 30%.

10. Device according to claim 9, **characterised in that** the filter means are produced as slip-on, removable filter caps.

11. Device according to claim 9 or 10, **characterised in that** the filter means are produced from polyethylene or a visually similar plastics material.

## Revendications

1. Dispositif de détecteur avec un détecteur pyroélectrique (10) réglé pour fonctionner à la lumière du jour, en particulier un détecteur de mouvement à infrarouges, et avec un dispositif électronique d'analyse (14, 18, 22) connecté derrière le détecteur (10), qui est développé pour générer un signal de commande (S) en réaction à un signal de détection du détecteur par rapport à une valeur de seuil, **caractérisé en ce que** le dispositif électronique d'analyse présente des moyens pour mesurer une luminosité ambiante de la lumière du jour (20, 22) ainsi que des moyens de compensation (18, 22) qui sont développés de manière que, en réaction à une modification prédéfinie de la luminosité ambiante de la lumière du jour, ils réalisent une modification compensatrice de la valeur du seuil et/ou une modification compensatrice du signal de détection, le dispositif électronique d'analyse étant développé de manière que les moyens de compensation agissent seulement lorsqu'une modification de la luminosité ambiante de la lumière du jour est supérieure à 1000 lux dans la plage de réponse, en forme de passe-bande, du détecteur.

2. Dispositif selon la revendication 1, **caractérisé en ce que** les moyens de compensation sont développés pour décaler au moins un niveau de valeur de seuil respectivement pour augmenter un écart entre deux valeurs de seuil.

3. Dispositif selon la revendication 1 ou 2, **caractérisé en ce que** les moyens de compensation sont développés pour suivre au moins une valeur de seuil dans le sens d'une influence sur le détecteur due à une modification de la luminosité ambiante.

4. Dispositif selon l'une quelconque des revendications 1 à 3, **caractérisé en ce que** les moyens de mesure présentent un capteur pyroélectrique qui, en ce qui concerne ses propriétés électriques, est formé d'après le détecteur pyroélectrique.

5. Dispositif selon l'une quelconque des revendications 1 à 3, **caractérisé en ce que** les moyens de mesure sont réalisés par un élément de détection de luminosité appartenant à un appareil de transmission et de capture d'image relié au dispositif électronique d'analyse, en particulier par un élément CCD ou CMOS ou un élément de prise d'image intégré comparable.

6. Procédé destiné à la mise en oeuvre d'un dispositif détecteur à la lumière du jour présentant un détecteur pyroélectrique (10), en particulier selon l'une quelconque des revendications 1 à 5, avec les étapes consistant à :
- détecter une modification d'une luminosité ambiante de la lumière du jour,
- détecter un signal de détection du détecteur,
- modifier un seuil de commutation pour un signal de commande du dispositif de détecteur et/ou
- modifier le signal de détection du détecteur en réaction à une modification détectée de la luminosité ambiante de la lumière du jour de plus de 1000 lux dans la plage de réponse, en forme de passe-bande, du détecteur, et
- générer le signal de commande en fonction du signal de détection du détecteur et du seuil de commutation.

7. Utilisation du dispositif de détecteur selon l'une quelconque des revendications 1 à 5, dans une lampe du détecteur avec un moyen luminescent, pouvant être activé comme capteur de mouvement, en réaction à un signal de sortie du détecteur pyroélectrique disposé sur ou dans un boîtier de la lampe, une installation de capture d'image électronique étant prévue sur ou dans le boîtier de la lampe et étant développée pour agir conjointement avec un module de transmission d'image sans fil pour un signal d'image généré dans un mode de capture d'image et recevable par un appareil externe.

8. Utilisation selon la revendication 7, **caractérisée en ce que** l'installation électronique de capture d'image présente un capteur photo CCD qui sert de moyen pour mesurer la luminosité ambiante de la lumière du jour.

9. Dispositif de détecteur avec un détecteur pyroélectrique (10) réglé pour fonctionner à la lumière du jour, en particulier un détecteur de mouvement à infrarouges, et avec un dispositif électronique d'analyse (14, 18, 22) connecté derrière le détecteur (10) qui est développé pour générer un signal de commande (S) en réaction à un signal de détection du détecteur par rapport à une valeur de seuil, en particulier selon une des revendications 1 à 5, **caractérisé en ce que** sur une zone de détection du détecteur sont montés des filtres optiques (24) qui sont développés de sorte que la partie spectrale de la lumière du jour du rayonnement incident sur la zone de détection présente une baisse < 10 % du rayonnement non filtré, de préférence < 5 %, et
les filtres sont développés de sorte qu'une atténuation du rayonnement incident dans le domaine des infrarouges dans une zone angulaire d'au moins 65°, de préférence au moins 75°, est indépendante d'un angle d'incidence sur le détecteur et qu'une perte de portée par absorption de la partie infrarouge se situe entre 20 et 30 %.

10. Dispositif selon la revendication 9, **caractérisé en ce que** les filtres sont réalisés en tant que cabochons filtrants enfichables et amovibles.

11. Dispositif selon la revendication 9 ou 10, **caractérisé en ce que** les filtres sont réalisés en polyéthylène ou en une matière synthétique ayant des effets optiques équivalents.
